# EUROPEAN PATENT SPECIFICATION

(11) **EP 3 055 490 B1**
(45) Date of publication and mention of the grant of the patent: **17.01.2018**
(21) Application number: 14781655.7
(22) Date of filing: 07.10.2014
(51) Int. Cl.: E21B 33/038, E21B 17/08, F16L 1/26

(54) **CONNECTOR**
VERBINDER
RACCORD

(30) Priority: 08.10.2013 GB 201317788
(43) Date of publication of application: 17.08.2016
(73) Proprietor: Expro North Sea Limited, Dyce, Aberdeen AB21 0LQ (GB)
(72) Inventor: TENNANT, Alan, Drum Kinross KY13 0UN (GB); TAYLOR, Keith, Inverurie Aberdeenshire AB51 8SD (GB); CHARLES, Scott, Houston, Texas77006 (US); MITCHELL, Craig, Aberdeen AB24 3DR (GB)
(74) Representative: Docherty, Andrew John
(86) International application number: PCT/GB2014/053013
(87) International publication number: WO 2015/052500

(56) References cited:
- GB-A- 2 102 522
- US-A- 4 153 278
- US-A- 4 708 376
- US-A1- 2013 249 210

## Description

### FIELD OF THE INVENTION

The present invention relates to a connection arrangement, and in particular to a releasable connection arrangement.

### BACKGROUND TO THE INVENTION

Connectors for providing a connection between components are common in many industries. For example, in the oil and gas industry connection between tubular components is often required. Further, in some applications a connection may be used to anchor one component inside a bore, such as anchoring a downhole tool within a casing tubular or within an open drilled bore.

In many cases a connector must be releasable to permit disconnection when necessary. Such disconnection may be provided in a controlled and user defined manner, such as when a user requires components to be separated. In some instances such disconnection may be necessary in an emergency situation, for example where disconnection is initiated to prevent damage to the connected components. For example, in marine environments involving the connection of a floating vessel with subsea infrastructure, excessive deviations of the vessel outside safe operational limits caused by wave motion, for example, may require the use of an emergency release connector.

Typical subsea connectors utilise a connection structure which includes engagement members such as dogs to engage with the part being connected to. However full and positive control of the position of the dogs at all stages of the engagement/disengagement procedures employed may not be achieved. Furthermore the available connectors are typically of relatively large diameter which can make deployment awkward. US 4,153,278 A discloses a misalignment connector for large pipelines, US 4,708,376 A discloses a collet-type connector for a subsea wellhead and US 2013/249210 A1 discloses a quick disconnect connector for subsea tubulars.

### SUMMARY OF THE INVENTION

According to a first aspect there is provided a connection arrangement for use in establishing a connection with an object, comprising
a body;
a connection member pivotally arranged relative to the body about a pivot axis and including an engagement feature, wherein the connection member is pivotal between an engaged configuration in which the engagement feature is engaged with the object to provide a connection thereto, and a disengaged configuration in which the engagement feature is disengaged from the object; and
an actuator member, wherein the connection member and actuator member define a pair of complementary actuation surfaces which cooperate when the actuator member moves from a first to a second direction to cause the connection member to pivot from the engaged configuration towards the disengaged configuration.

The connection arrangement may establish a connection, e.g. a releasable connection, between the body and the object.

The pair of actuation surfaces may continuously cooperate during the movement of the actuator member from the first to the second direction or vice versa.

The pair of actuation surfaces may comprise a first actuation surface provided by or carried on the actuator member.

The pair of actuation surfaces may comprise a second actuation surface provided by or carried on the connection member.

Either or both of the actuation surfaces may be discontinuous.

The first and second actuation surfaces may be in continuous contact with one another such that movement of the actuator member actuates the connection member into either the engaged or disengaged configuration. The continuous contact between the first and second actuation surfaces may remain during the movement from the engaged or disengaged configuration, or vice versa. By remaining a continuous contact between the first and second actuation surfaces during movement of the actuator member jamming or backlashing of the connection member with respect to the actuator member may be prevented. Backlashing or jamming of the connection member may occur when, for example, loose particles, such as debris, interrupt the movement of the connection member.

The first actuation surface may include a first and second cam. Alternatively the first cam may be included on a first actuation surface of a first actuator member and the second cam may be included on a third actuation surface provided on a second actuator member. In this alternative both first and second actuator members may each define a pair of complementary actuation surfaces which cooperate when the actuator members move from a first to a second direction to cause the connection member to pivot from the engaged configuration towards the disengaged configuration.

The first and second cams of the actuator member or actuator members may define a cam-follower relationship with the second actuation surface of the connection member. The second actuation surface may exhibit a curved predetermined profile and may be on a spline or partially on a spline of the connection member. The first and second cams may move simultaneously along the profile of the second actuation surface. By providing a simultaneous movement of the first and second cams, a connection member may be actuated from the engaged to the disengaged, or vice versa, in a single movement of the actuation member.

The connection member may be arranged such that it is in contact with the body at a contact point. In use, the connection member may pivot with respect to the contact point, i.e. the contact point may define a pivot axis for pivotal movement of the connection member. For example, the connection member may comprise a protrusion or recess which cooperates with a corresponding recess or protrusion in the body. The protrusion or recess of the connection member and/or body may provide the contact point. Alternatively the connection member may be connected by a pivot member to the body. For example a pivot pin passing through the connection member and attached to the body.

In use, the first and second cams of the actuator member or members may follow the curved profile of the second actuation surface and cause pivotal movement of the connection member with respect to the body. The first and second cams may cause the connection member to radially pivot inward or outward with respect to a longitudinal axis of the object, i.e. to radially pivot into either the engaged or disengaged configuration.

In use, maintaining the actuator member in either the engaged or disengaged configuration may retain the connection member in either the engaged or disengaged configuration, respectively.

The object may further comprise an object engagement feature adapted to cooperate with the engagement feature of the connection member. The object engagement feature may be a recess or protrusion. For example, the object engagement feature may be an annular groove arranged on a peripheral surface of the object, e.g. an outer peripheral surface of the object.

The engagement feature of the connection member may comprise a recess or protrusion, adapted to cooperate with the object engagement feature. For example, the engagement feature may be a protrusion adapted to engage with the annular groove of the object. The engagement feature may be arranged on a surface opposing the second actuation surface of the connection member.

In some examples, engagement features of the connection member may have a profile, e.g. a serrated profile, which may match a corresponding profile of an object engagement feature. For example, a serrated profile on a protrusion engagement feature may engage with a corresponding serrated profile of an annular groove on an object.

The connection member may comprise a collet or a dog or a plurality of dogs. The plurality of dogs may be pivotally arranged relative to the body. The plurality of dogs may be arranged about a common axis of the body. The pivot points of the dogs may be arranged to be in the same plane. By arranging the dogs with the pivot points in the same plane, a simultaneous pivotal rotation of the plurality of dogs may be achieved. By arranging the dogs with the pivot points in the same plane, that is normal to a common axis of the body, movement of an actuator member along that axis can achieve a simultaneous pivotal rotation of the plurality of dogs. A plurality of dogs circumferentially disposed about a common axis of the body and arranged for simultaneous pivotal rotation to engage/disengage with an object, can be considered to form a collet i.e. the dogs act as collet segments collectively engaging/disengaging with the object.

The/each dog(s) may comprise the second actuation surface which is in contact with the first and second cams of the actuator member.

The/each dog(s) may comprise the engagement feature. The engagement feature may be located on a free end of the/each dog on a surface opposing the second actuation surface.

The actuator member may be an annular piston. The annular piston may be movable along a longitudinal axis with respect to the object. The movement of the piston may be actuable by a hydraulic pressure.

The piston may comprise the first actuation surface which may comprise the first and second cams. The first actuation surface and/or the first and second cams of the piston may be in continuous contact with the second actuation surface of the/each dog(s). The second actuation surface of the/each dog(s) may comprise a curved profile. The second actuation surface may be on a spline of the dog(s) or the second actuation surface may include a spline of the dog(s).

In use, movement of the piston in the first longitudinal direction with respect to the object may cause the first and second cam to cooperate with the second actuation surface. For example, the first and second cams may move along the profile of second actuation surface in a first direction. The cooperation between the first and second cams and the profile of the second actuation surface may lead to pivotal movement of the dog(s) with respect to the body. For example, the cooperation between the first and second cam with the second actuation surface may cause each/the dog(s), or an end of the dog(s) including the engagement feature, to pivot inwardly. Inward pivotal movement of the dog(s) or an end of the dog(s) including the engagement feature, may cause the dog(s) to either engage or disengage with the object, i.e. the engagement feature of the/each dog(s) engages or disengages with the further engagement feature of the object.

In use, movement of the piston in the second longitudinal direction with respect to the object may cause the first and second cam to cooperate with the second actuation surface. For example, the first and second cams may move along the profile of second actuation in a second direction. The cooperation between the first and second cams and the profile of the second actuation surface may lead to pivotal movement of the dog(s) with respect to the body. For example, the cooperation between the first and second cam with the second actuation surface may cause each/the dog(s), or an end of the dog(s) including the engagement feature, to pivot outwardly. Outward pivotal moment of the dogs or an end of the dog(s) including the engagement feature may cause the dogs to either disengage or engage from the object.

Advantageously when the piston or other actuator member is in the engaged position the contact surfaces between the first and second cams and the second actuation surface on the dogs are parallel to and concentric with the common axis of the body. In such an arrangement radial forces acting on the contact surfaces will not produce a resultant force component tending to cause disengagement of the connection made.

In use, the first and second cams of the piston may remain in continuous contact with the second actuation surface of each/the dog(s) which may result in a unison movement of the dogs. By simultaneously engaging or disengaging the dogs with the object, sticking of the dog(s) to the object and/or damages to the connection arrangement or object may be prevented.

By providing first and second cams that remain in continuous contact with the with the second actuation surface during the engagement and disengagement with the object, the dogs may be kept under the control of the actuator member. A three point contact with the body and the actuator member is maintained. Both cams are in continuous contact with the second actuation surface or portion of the second actuation surface on each dog. The dog is also in contact with the body (via a pivot member or a contact point about which the dog pivots). This continuous three point contact can define (fix) the position of each dog at any given position of the actuator member i.e. the three point contact between dog(s), and the body and the first and second cams of the actuator member, can be formed and arranged to fix the position of dog(s) relative to a given position of the actuator member. Thus dogs can be fully controlled at each point during movement of an actuator member and also held in fixed position at any point when the actuator member is not moving e.g. the fully engaged and fully disengaged positions of the dogs.

The holding of the dog(s) in a fixed position dependent on the position of the actuator member, by means of the three point contact of first and second cams and pivot point, can be achieved in various ways illustrated by embodiments described in more detail hereafter. For example, where the engagement feature is located on a free end of the/each dog on a surface opposing the second actuation surface, then the fixing of the dogs in position, depending on the actuator member position, can be achieved as follows. The first cam is located to one side of the pivot axis of the dog and the second cam is located to the other side of the pivot axis of the dog during movement of the actuator member, at least until the engagement feature has engaged with the object.

A different arrangement may be provided where the engagement feature is located on a free end of the/each dog and the first cam contacts a portion of the second actuation surface at the same side of the/each dog as the engagement feature. The second cam contacts a portion of the second actuation surface on a surface opposed to the side of the/each dog with the engagement feature and both the first and second cams are positioned at the end of the/each dog on the other side of the pivot axis from the engagement feature, at least until the engagement feature has engaged with the object.

The object may comprise a tubular part. The object engagement feature may be an annular groove on an outer periphery of the object, e.g. the tubular part of the object. In the engaged configuration the engagement features may be clamped into the groove by moving the annular piston in the first direction. In some examples, the groove of the object may be provided on an inner periphery of the object. In this example, the dogs may be inserted into the object. Movement of the piston in the first direction may pivot the dog(s), or at least an end of the dog(s) including the engagement feature, outwards towards the object so that their engagement features may engage with the groove of the object.

By maintaining the piston in the engaged configuration the dogs may be retained in the engaged configuration with the object, allowing for the hydraulic pressure to be switched off.

The connection arrangement may be retained in the disengaged configuration by de-activating the hydraulic pressure, allowing for the hydraulic pressure to be switched off. The hydraulic pressure may only be needed for operating the piston in the transition from either engaged to disengaged configuration or disengaged to engaged configuration.

The body may be a tubular or tubing, for example, an injection or production tubing. The body may comprise a wellhead, such as a subsea wellhead.

The object may comprise a subsea well unit, for example, a production tree or a subsea test tree. In use, the connection arrangement may provide a connection, e.g. a releasable connection, between the subsea well unit and the wellhead.

The connection arrangement may be a subsea connector, for releasable connection of subsea components in the oil and gas industry. It may be an emergency release connector for rapid disconnection when required. The connection arrangements described herein can be notably compact in diameter, allowing the possibility that they can be sized to pass through relatively small apertures, including that of rotary tables on oil drilling rigs which may be of 49.5 inches in diameter in many cases. Furthermore the positive and continuous control of engagement/disengagement that can be afforded by arrangements described herein can allow high angle release of a subsea connector i.e. in an emergency situation where the body and the object are being being laterally displaced relative to each other reliable release may be achieved. Coupling members formed as described below can assist in high angle release.

The connection arrangement may comprise one or more coupling member(s) which may provide an inter-engaging coupling arrangement between the body and the object. The coupling members may be provided with seals for sealing engagement between parts of the body and the object, for example for sealing engagement between a tubular of the body and a tubular of the object. The coupling member(s) may act as guide members for connecting and/or disconnecting the body from the object.

Typically coupling members may be mounted on respective peripheries of the body and of the object. For example a first coupling member may be mounted on an end of the body and a second coupling member may be mounted on an end of the object.

The first and second coupling members may be tapered, for example conical or generally conical in form and may be formed to inter-engage by nesting one inside the other in a male-female connection.

Where the connection arrangement is for connecting tubulars, tubing, or tubular parts of a body and an object, conical coupling members are advantageous. During connection the nesting together of the conical first and second coupling members provides a degree of self-centring as the object and body approach each other. During disconnection any lateral forces between the conical surfaces will produce a resultant component tending to urge the object and body apart.

In a convenient arrangement the first coupling member may be a generally conical opening or mouth on the body. The first coupling member may comprise a set of annular members of increasing diameter towards the opening of the mouth. Each annular member is disposed about the same longitudinal axis. A corresponding second coupling member on the object, for nesting inside the first coupling member of the body, may be generally conical and may be formed for contact with the annular members of the first coupling member when the coupling arrangement is in the engaged configuration. The generally conical second coupling member may comprise a plurality of ribs, each projecting radially outwards about a longitudinal axis and forming a conical profile narrowing towards a free end to which the body connects.

As an alternative the conical feature of the second coupling member may comprise the annular members (narrowing in diameter towards the free end of the object) and the conical feature of the first coupling member may comprise ribs (projecting radially inwardly and forming a conical opening).

The arrangements comprising annular rings and radial ribs provides good but discontinuous contact between the coupling members when the connection arrangement is engaged, with reduced friction compared to continuously surfaced cones for example.

The conical or generally conical form of either or both the first and second coupling members may comprise a curved profile. For example the first coupling member as a mouth on the body may have a radially inwardly convex profile and the second coupling member may have a complimentary concave profile

The first and second coupling members may roll off each other in case of an emergency disconnect between the body and the object. The rolling off movement provided by the coupling members may prevent damage to the connection arrangement and/or the object as described further hereafter with respect to an embodiment.

According to a second aspect there is provided a method for establishing and releasing a connection between a body and an object, comprising:
positioning the body with respect to the object;
moving a actuator member of the body in a first direction, wherein the actuator member cooperates with a connection member of the body causing the connection member to pivotally move into an engaged configuration in which an engagement feature is engaged with the object to provide a connection thereto;
moving the actuator member in a second direction wherein the actuator member cooperates with the connection member causing the connection member to pivotally move into a disengaged configuration in which the engagement feature is disengaged from the object; and
wherein the connection member and actuator member define a pair of complementary actuation surfaces which cooperate when the actuator member moves from a first to a second direction to cause the connection member to pivot from the engaged configuration towards the disengaged configuration.

The method may employ the connection arrangement of the first aspect of the invention as described herein.

It should be understood that the features defined above in accordance with any aspect of the present invention or below in relation to any specific embodiment of the invention may be utilised, either alone or in combination with any other defined feature, in any other aspect or embodiment of the invention.

### BRIEF DESCRIPTION OF THE DRAWINGS

These and other aspects of the present invention will now be described, by way of example only, with reference to the accompanying drawings, in which:
FIGs. 1A and 1B are schematic partial cross sectional views of a connector arrangement in an open position.
FIG. 2 is a schematic partial cross sectional view of a connector arrangement of the present invention in a locked position.
FIG. 3 is a schematic cross sectional view of a connector arrangement during connect or disconnect.
FIGs. 4A and 4B are schematic cross sectional views of an individual dog and annular piston in the disengaged position and in the engaged position.
FIGs. 5A and 5B show in cross section a connector arrangement in a closed position.
FIGs 6A to 6D show in cross section detail the operation of the connector arrangement of figures 5.
FIGs 7A and 7B show a connector arrangement in the open and closed positions..

### DETAILED DESCRIPTION OF THE DRAWINGS

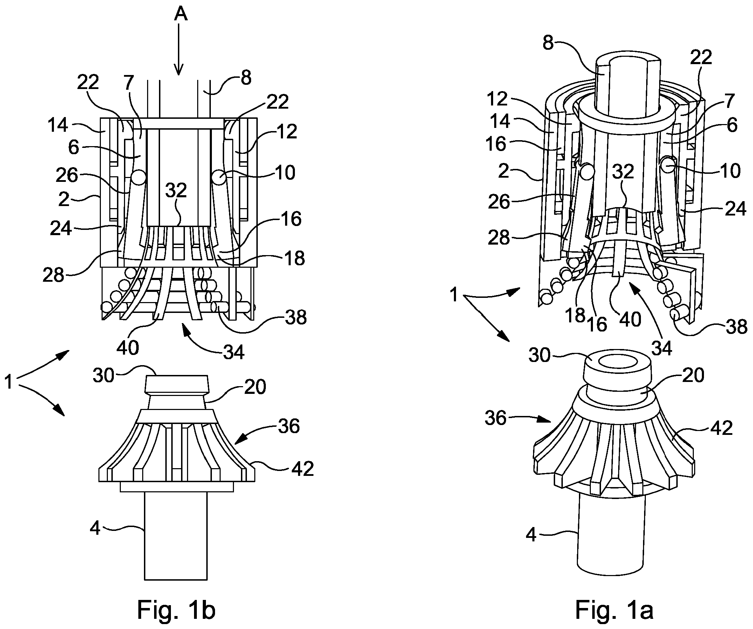

Figures 1A and 1B show a connector arrangement suitable for establishing a tubular connection suspended from a surface vessel to a subsea installation such as a wellhead. Figure 1A is in partial cut away perspective and figure 1B in partial cross section elevation.

The connector arrangement 1 comprises a connector unit 2 to be mounted onto the subsea installation at a tube end 4 (rest of subsea installation not shown). The connector unit 2 includes as connection members 6 of a set of dogs 7 circumferentially mounted around a tubular body 8. The individual dogs 7 are pivoted on pivot pins 10 all in the same plane, normal (at right angles) to the longitudinal axis of the connector unit 2 and tubular body 8. As an alternative to pivot pins 10 a pivot ring could be provided, passing through all the dogs 7 at the same position as the pivot pins shown.

An annular piston (as actuator member) 12 encircles the dogs and is contained within outer cylinder 14. The piston 12 is powered by hydraulics and is the actuator member for the arrangement.

The dogs 7 include engagement features 16, inward projections 18 formed for engagement with annular groove 20 on the tube end 4.

The piston 12 has first and second cams 22,24 as part of a first actuation surface that follow the curved profile of a second actuation surface 26 on dogs 7 that include a spline 28. When the piston 12 moves downwards from the position shown in figures 1B as suggested by arrow A, the cams 22, 24 cause motion in unison of the dogs 7 about pivot pins 10. If the extreme end 30 of tube 4 is positioned to abut or almost abut the extreme end 32 of the tubular body 8 then the action of the cams will be to cause the engagement features 16 of the dogs to engage the annular groove 20 thus connecting the tubular 8 and tube end 4.

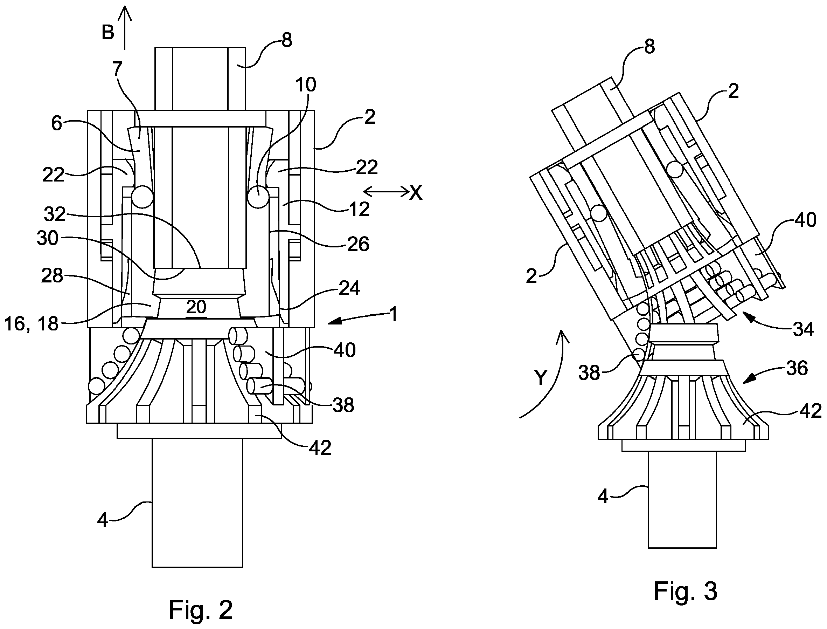

The connected and locked position that is obtained is shown in figure 2. Disengagement of the connection is performed by motion of the annular piston 12 in the opposite direction as suggested by arrow B in figure 2. The profile of the second actuation surface 26 when following cams 22 and 24 determines that contact between the cams 22,24 and the dogs 7 is always maintained during engagement and disengagement, of the connection. Together with the contact at the pivot pins 10 this means that the dogs 7 (connection members of the connection arrangement) are always held by three points of contact. Thus the position of the dogs 7 is always fixed by the position of annular piston 12 at any given moment. The first and second cams 22,24 are always one above the pivot pins 10 the other below the pivot pins 10. In the arrangement shown in figures 1 and 2 engagement and disengagement is positively controlled at all times by the piston 12, thus avoiding jamming or backlash that can occur if the dogs have free motion allowed at any point in the connection or disconnection procedure.

A feature of the arrangement shown in locked position figure 2 is that the contact surfaces between cams 22, 24 and the dogs 7 (second actuation surface 26) are parallel to (and concentric with) the longitudinal axis. This arrangement of the profiling of the pair of actuation surfaces (when the connection arrangement is engaged) has an advantage. If a radially outwards or inwards force is experienced (as suggested by double headed arrow X) then there will be no resultant force component in the longitudinal direction urging the disengagement of the arrangement.

The connection arrangement of figures 1 and 2 also includes coupling members. The first coupling member (of connector unit 2) ends in a conical, inwardly convex profile, mouth 34. The second coupling member (of tube end 4) is a corresponding conical concave profiled end portion 36. The coupling members 34,36 aid in centring the connection arrangement when the connector unit 2 and tube end 4 are brought together for engagement and can also aid in disengagement as discussed below with respect to figure 3. The mouth 34 of the connector unit 2 comprises annular rings 38 of increasing diameter towards the mouth end that are held in radially inwardly projecting ribs 40. The end portion 36 of tube end 4 comprises radially outwardly projecting ribs 42 narrowing towards the extreme end of the tube.

As can be seen in figure 2 when the connection arrangement is engaged the end portion 36 nests inside mouth 34 with the rings 38 and ribs 42 (and/or ribs 40) in contact. There is less contact than there would be with continuous conical surfaces and so reduced friction on disengagement. Furthermore as the rings 38 are transverse to the ribs 42 connection can be made without the connector unit 2 having to be at any particular rotational orientation (about the longitudinal axis) to tube end 4.

Figure 3 shows a disconnection of the arrangements of figures 1 and 2 under a stressed condition, such as may occur subsea where a disengagement of a connection arrangement of the invention is being carried out in an emergency. For example, where a surface vessel connecting to a subsea installation is displaced from its holding position above the installation, by bad weather. As shown in figure 3 the connection has been disengaged and connector unit 2 is at an angle to the tube end 4. The curved profile and conical shape of the mouth 34 and tube end portion 36 allow relatively smooth completion of disconnection, with the connector unit 2 "rolling" upwards and away from the tube end 4 as indicated by curved arrow Y.

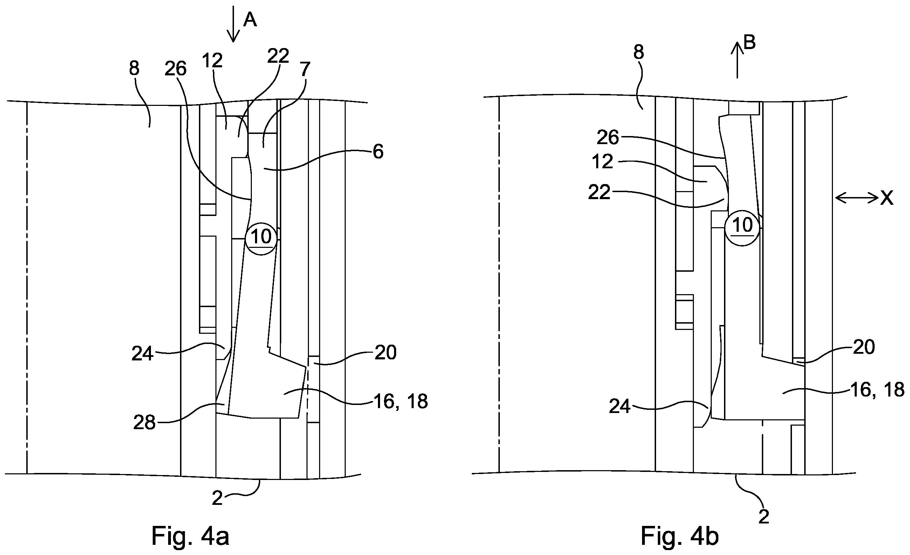

Figure 4A and figure 4B show in schematic cross section detail the operation of an annular piston 12 and dog 7 arrangements similar to that of figures 1 to 3 except with the annular piston operating inside the dogs 7. Like parts are numbered the same as in the earlier figures. As in figures 1 and 2 the motion of piston 12 in the direction of arrow A causes the profiled surface 26 of dog 7 to follow the motion of cams 22 and 24. This results in pivoting of dog 7 about pivot pin 10 giving, in this example, radially outwards motion of engagement feature 16 (protrusion 18). Starting from the disengaged position of figure 4A the protrusion 18 is directed into an annular groove 20 when moving to the fully engaged position shown in Figure 4B.

As in the example of figures 1 and 2 the contact between the cams 22, 24 and the second actuation surface 26 are parallel to (and concentric with) the longitudinal axis when the fully engaged position is attained. Radially directed forces indicated by double headed arrow X will not produce a resultant component tending to disengage the connection made.

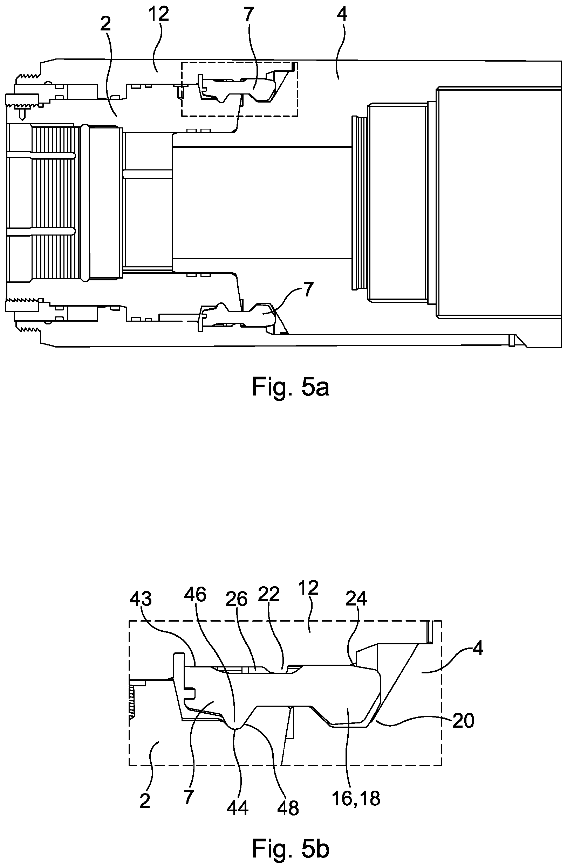

A further embodiment of the invention is illustrated in cross section figures 5A and 5B. In figure 5A a connector unit 2 is shown fully engaged with a tubing end 4. Engagement is by means of dogs 7 with the area shown in dashed line shown in more detail in magnified view figure 5B. An outer annular ring 12 provided outside dogs 7 (only one dog 7 shown in the detail figure 5B). In the fully engaged and locked position shown, two cams 22 and 24, provided on an actuation surface of the ring 12, hold the dog in position by contact with second actuation surface 26 on the dog 7. Engagement feature 16, a protrusion 18 of the dog 7 is located in an annular groove 20 of tubing end 4. A further contact 43 is made between the ring 12 and surface 26 at the end distal to the protrusion 18, providing more security of fixing. Dog 7 can pivot about a contact point 44 but only when the annular ring 12 allows i.e. when the cams direct pivoting movement of the dog 7. The contact point is provided by a protrusion 46 on the dog nesting in rotating contact with a recess 48 of the connector unit 2.

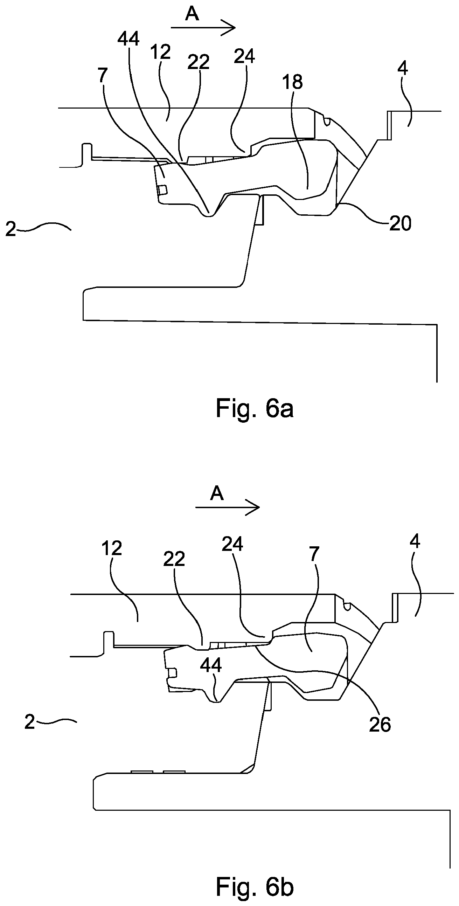

Operation of this embodiment is illustrated in figures 6A to 6D. In figure 6A the connector unit 2 and tube end 4 are in contact ready for engaging together. Annular ring 12 is ready to move in the direction of arrow A. At this point the dog 7 is disengaged with protrusion 18 angled away from groove 20 by virtue of the action of cams 22 and 24 on actuation surface 26 which in concert with contact point 44 hold the dog 7 at three points, preventing movement. Movement in the direction A commences.

As shown in figure 6B the following of cams 22,24 by the profiled actuation surface 26 starts the pivoting of the of dog 7about contact point 44.

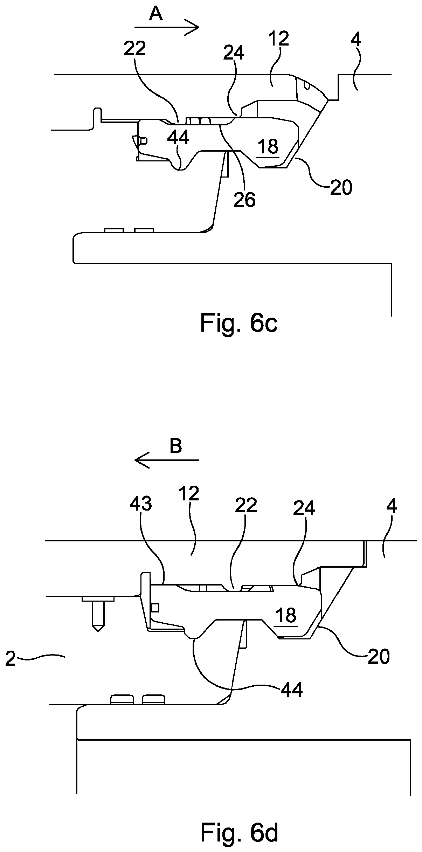

In figure 6C continued movement of ring 12 in direction A has caused further pivoting of the dog 7 to fully engage protrusion 18 in groove 20. Up until this time the cams 22 and 24 have always been to either side of the pivot contact point 44. However the ring 12 can now continue motion in direction A until the position of figure 6D is reached. In this position additional contact 43 provides further security of engagement. As with the embodiments discussed above the contact between the ring 12 (cams 22, 24 and in this case contact 43) and the second actuation surface 26 are parallel to (and concentric with) the longitudinal axis when the fully engaged position is attained.

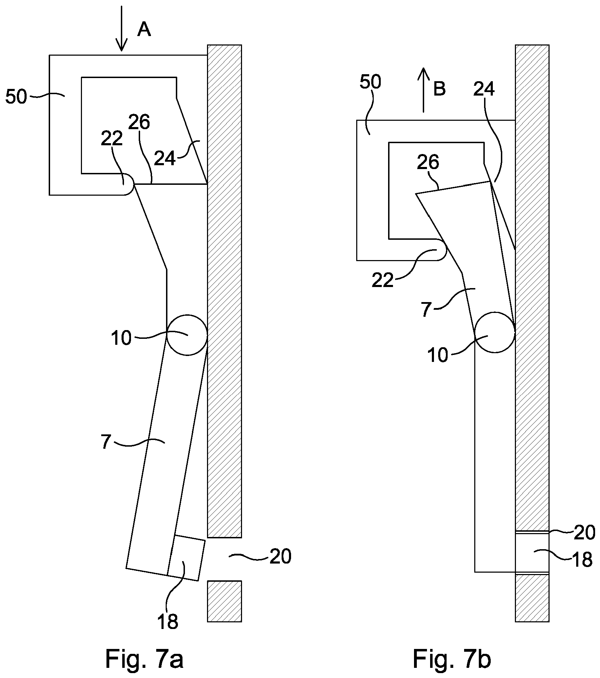

Figures 7A and 7B illustrate schematically a further embodiment. In this embodiment dog 7 pivots about pivot pin 10. Motion of actuator member 50 in direction A causes the two cams 22 and 24 to interact with surface 26 of dog 7 to either side of its body, leading to the engaged position shown in figure 7B where protrusion 18 is in groove or slot 20. As can be seen from figure 7B the cams 22, 24 are in constant contact with the surface 26 of the dog providing secure and controlled motion of the dog in accordance with the position of actuator member 50. In this example the cams 22 and 24 are above the pivot point (pivot pins 10) at all times during engagement and disengagement (arrow B).

## Claims

1. A connection arrangement (1) for use in establishing a connection with an object (4), comprising
a body (8);
a plurality of dogs (7) each pivotally arranged relative to the body (8) about a pivot support and each including an engagement feature (16), the dogs (7) being pivotal in reverse directions between an engaged configuration in which the respective engagement features (16) are engaged with the object (4) to provide a connection thereto, and a disengaged configuration in which the respective engagement features (16) are disengaged from the object (4); and
an actuator member (12, 50) comprising a first actuation surface arranged to cooperate with a complementary second actuation surface provided on each dog (7) when the actuator member (12, 50) moves in reverse directions between first and second positions to cause the plurality of dogs (7) to pivot between their engaged and disengaged configurations, **characterized in that** the first actuation surface on the actuator member (12, 50) includes a first cam (22) and a second cam (24) which are in continuous contact with the second actuation surface (26) of each dog (7) such that three points of continuous contact are defined between each dog (7), its respective pivot support, and the first and second cams (22, 24), to fix the position of each dog (7) relative to a given position of the actuator member (12, 50).

2. The connection arrangement (1) of claim 1 wherein the plurality of dogs (7) are arranged about a common axis of the body (8).

3. The connection arrangement (1) of claim 2 wherein each of the plurality of dogs (7) is arranged with their pivot supports in the same plane.

4. The connection arrangement (1) of any one of claims 1 to 3 wherein the actuator member (12) is an annular piston (12), optionally wherein the annular piston (12) is moveable about a longitudinal axis with respect to the object (4).

5. The connection arrangement (1) of any preceding claim wherein the actuator member (12) is actuable by a hydraulic pressure.

6. The connection arrangement (1) of any preceding claim wherein the first and second cams (22, 24) move along the profile of second actuation surface (26) in a first direction to cause the dogs (7), or an end of the dogs including the engagement feature (16), to pivot inwardly and when moving along the profile of second actuation surface (26) in a second, opposite, direction cause the dogs (7), or an end of the dogs including the engagement feature (16), to pivot outwardly.

7. The connection arrangement (1) of any preceding claim wherein when the actuator member (12) is in the engaged position the contact surfaces between the first and second cams (22, 24) and the second actuation surface (26) on the dogs (7) are parallel to and concentric with a common axis of the body (8).

8. The connection arrangement (1) of any preceding claim wherein the engagement feature (16) is located on a free end of each dog on a surface opposing the second actuation surface (26) and the first cam (22) is located to one side of the pivot support of the dog (7) and the second cam is located to the other side of the pivot support of the dog (7) during movement of the actuator member (12, 50), at least until the engagement feature (16) has engaged with the object (8).

9. The connection arrangement (1) of any one of claims 1 to 8 wherein the engagement feature (16) is located on a free end of each dog (7) and wherein:
the first cam (22) contacts a portion of the second actuation surface (26) at the same side of the dog (7) as the engagement feature (16);
the second cam (24) contacts a portion of the second actuation surface (26) on a surface opposed to the side of each dog (7) with the engagement feature (16);
and the first and second cams (22, 24) are both positioned at the end of each dog (7) on the other side of the pivot support from the engagement feature (16), at least until the engagement feature (16) has engaged with the object (4).

10. The connection arrangement (1) of any preceding claim wherein the object (4) comprises a tubular part and includes an annular groove (20) on the tubular part of the object for engagement with the engagement features (16) of the dogs (7).

11. The connection arrangement (1) of any preceding claim wherein the body (8) is selected from the group consisting of a tubular, a tubing, and a wellhead and/or wherein the object (4) comprises a subsea well unit, such as a production tree or a subsea test tree.

12. The connection arrangement (1) of any preceding claim wherein the connection arrangement is a subsea connector.

13. The connection arrangement (1) of any preceding claim further comprising coupling members (34, 36) to act as guide members for connecting and/or disconnecting the body (8) from the object (4), optionally comprising a first coupling member (34) mounted on an end of the body (8) and a second coupling (36) member mounted on an end of the object (4), optionally wherein the first and second coupling members (34, 36) are conical or generally conical in form and formed to inter-engage by nesting one inside the other in a male-female connection.

14. The connection arrangement (1) of claim 13 wherein the first coupling member is a mouth (34) on the body (8) and comprises a set of annular members (38) of increasing diameter towards the opening of the mouth (34); and wherein the second coupling member (36) on the object comprises a plurality of ribs (40, 42), each projecting radially outwards about a longitudinal axis and forming a conical profile narrowing towards a free end to which the body (8) connects.

15. The connection arrangement (1) of claim 13 wherein the first coupling member (34) has a radially inwardly convex profile and the second coupling member (36) has a complimentary concave profile.

## Patentansprüche

1. Verbindungsanordnung (1) zur Verwendung bei der Herstellung einer Verbindung mit einem Objekt (4), die Folgendes umfasst
einen Körper (8);
eine Vielzahl von Klauen (7), von denen jede relativ zum Körper (8) schwenkbar um eine Schwenkstütze angeordnet ist und jede ein Einrastmerkmal (16) beinhaltet, wobei die Klauen (7) zwischen einer eingerasteten Auslegung, in der die jeweiligen Einrastmerkmale (16) in das Objekt (4) eingerastet sind, um eine Verbindung damit bereitzustellen, und einer ausgerasteten Auslegung, in der die jeweiligen Einrastmerkmale (16) aus dem Objekt (4) ausgerastet sind, in Rückwärtsrichtungen schwenkbar sind; und
ein Aktuatorelement (12, 50), das eine erste Betätigungsfläche umfasst, die angeordnet ist, um mit einer komplementären zweiten Betätigungsfläche, die an jeder Klaue (7) bereitgestellt ist, zusammenzuwirken, wenn sich das Aktuatorelement (12, 50) zwischen einer ersten und einer zweiten Position in Rückwärtsrichtungen bewegt, um zu bewirken, dass die Vielzahl von Klauen (7) zwischen ihren eingerasteten und ausgerasteten Auslegungen schwenken, **dadurch gekennzeichnet, dass**
die erste Betätigungsfläche am Aktuatorelement (12, 50) einen ersten Nocken (22) und einen zweiten Nocken (24) beinhaltet, die mit der zweiten Berührungsfläche (26) jeder Klaue (7) kontinuierlich in Kontakt sind, derart, dass drei Punkte des kontinuierlichen Kontakts zwischen jeder Klaue (7), ihren jeweiliger Schwenkstütze und dem ersten und dem zweiten Nocken (22, 24) definiert sind, um die Position jeder Klaue (7) relativ zu einer gegebenen Position des Aktuatorelements (12, 50) zu fixieren.

2. Verbindungsanordnung (1) nach Anspruch 1, wobei die Vielzahl von Klauen (7) um eine gemeinsame Achse des Körpers (8) angeordnet ist.

3. Verbindungsanordnung (1) nach Anspruch 2, wobei jede der Vielzahl von Klauen (7) mit ihren Schwenkstützen in derselben Ebene angeordnet ist.

4. Verbindungsanordnung (1) nach einem der Ansprüche 1 bis 3, wobei das Aktuatorelement (12) ein Ringkolben (12) ist, optional wobei der Ringkolben (12) mit Bezug auf das Objekt (4) um eine Längsachse bewegbar ist.

5. Verbindungsanordnung (1) nach einem der vorhergehenden Ansprüche, wobei das Aktuatorelement (12) durch einen hydraulischen Druck betätigbar ist.

6. Verbindungsanordnung (1) nach einem der vorhergehenden Ansprüche, wobei sich der erste und der zweite Nocken (22, 24) entlang des Profils der zweiten Betätigungsfläche (26) in eine erste Richtung bewegen, um zu bewirken, dass die Klauen (7) oder ein Ende der Klauen, das das Einrastmerkmal (16) beinhaltet, nach innen schwenken, und wenn sie sich entlang des Profils der zweiten Betätigungsfläche (26) in eine zweite, entgegengesetzte Richtung bewegen, bewirken, dass die Klauen (7) oder ein Ende der Klauen, das das Einrastmerkmal (16) beinhaltet, nach außen schwenken.

7. Verbindungsanordnung (1) nach einem der vorhergehenden Ansprüche, wobei, wenn sich das Aktuatorelement (12) in der eingerasteten Position befindet, die Kontaktflächen zwischen dem ersten und dem zweiten Nocken (22, 24) und die zweite Betätigungsfläche (26) an den Klauen (7) parallel und konzentrisch zu einer gemeinsamen Achse des Körpers (8) stehen.

8. Verbindungsanordnung (1) nach einem der vorhergehenden Ansprüche, wobei während der Bewegung des Aktuatorelements (12, 50) das Einrastmerkmal (16) sich an einem freien Ende jeder Klaue auf einer Fläche gegenüber der zweiten Betätigungsfläche (26) befindet und der erste Nocken (22) sich auf einer Seite der Schwenkstütze der Klaue (7) befindet und der zweite Nocken sich auf der anderen Seite der Schwenkstütze der Klaue (7) befindet, mindestens bis das Einrastmerkmal (16) in das Objekt (4) eingerastet ist.

9. Verbindungsanordnung (1) nach einem der Ansprüche 1 bis 8, wobei das Einrastmerkmal (16) sich an einem freien Ende jeder Klaue (7) befindet und wobei:
der erste Nocken (22) einen Abschnitt der zweiten Betätigungsfläche (26) auf derselben Seite der Klaue (7) wie das Einrastmerkmal (16) kontaktiert;
der zweite Nocken (24) einen Abschnitt der zweiten Betätigungsfläche (26) auf einer Fläche gegenüber der Seite jeder Klaue (7) mit dem Einrastmerkmal (16) kontaktiert; und
der erste und der zweite Nocken (22, 24) beide am Ende jeder Klaue (7) auf der anderen Seite der Schwenkstütze vom Einrastmerkmal (16) positioniert sind, mindestens bis das Einrastmerkmal (16) in das Objekt (4) eingerastet ist.

10. Verbindungsanordnung (1) nach einem der vorhergehenden Ansprüche, wobei das Objekt (4) ein Rohrteil umfasst und am Rohrteil des Objekts eine Ringnut (20) zum Einrasten in die Einrastmerkmale (16) der Klauen (7) beinhaltet.

11. Verbindungsanordnung (1) nach einem der vorhergehenden Ansprüche, wobei der Körper (8) ausgewählt ist aus der Gruppe, bestehend aus einem Rohr, einer Verrohrung und einem Bohrlochkopf und/oder wobei das Objekt (4) eine Unterseebohrlocheinheit umfasst, wie etwa ein Produktionskreuz oder ein Unterseetestkreuz.

12. Verbindungsanordnung (1) nach einem der vorhergehenden Ansprüche, wobei die Verbindungsanordnung ein Unterseeverbinder ist.

13. Verbindungsanordnung (1) nach einem der vorhergehenden Ansprüche, die ferner Kopplungselemente (34, 36) umfasst, die als Führungselemente zum Verbinden und/oder Trennen des Körpers (8) vom Objekt (4) fungieren, und optional ein erstes Kopplungselement (34) umfasst, das an einem Ende des Körpers (8) montiert ist, und ein zweites Kopplungselement (36), das an einem Ende des Objekts (4) montiert ist, optional wobei das erste und das zweite Kopplungselement (34, 36) konisch oder im Allgemeinen konisch in der Form sind und gebildet, um durch Verschachteln von einem im anderen in einer Stecker-Buchse-Verbindung ineinanderzurasten.

14. Verbindungsanordnung (1) nach Anspruch 13, wobei das erste Kopplungselement ein Mund (34) am Körper (8) ist und einen Satz von Ringelementen (38) von zur Öffnung des Mundes (34) hin zunehmendem Durchmesser umfasst; und wobei das zweite Kopplungselement (36) am Objekt eine Vielzahl von Rippen (40, 42) umfasst, von denen jede radial nach außen um eine Längsachse vorsteht und ein konisches Profil bildet, das sich zu einem freien Ende hin, mit dem der Körper (8) verbunden ist, verengt.

15. Verbindungsanordnung (1) nach Anspruch 13, wobei das erste Kopplungselement (34) ein radial nach innen konvexes und das zweite Kopplungselement (36) ein komplementäres konkaves Profil aufweist.

## Revendications

1. Agencement de connexion (1) destiné à être utilisé lors de la réalisation d'une connexion avec un objet (4), comprenant :
un corps (8) ;
une pluralité de clabots (7) dont chacun est agencé de façon pivotante par rapport au corps (8) autour d'un support de pivot et chacun inclut une caractéristique d'engagement (16), les clabots (7) pouvant pivoter dans des directions inverses entre une configuration engagée dans laquelle les caractéristiques d'engagement respectives (16) sont engagées dans l'objet (4) de manière à assurer une connexion sur celui-ci et une configuration désengagée dans laquelle les caractéristiques d'engagement respectives (16) sont désengagées de l'objet (4) ; et
un élément d'actionneur (12, 50) qui comprend une première surface d'actionnement qui est agencée de manière à coopérer avec une seconde surface d'actionnement complémentaire qui est prévue sur chaque clabot (7) lorsque l'élément d'actionneur (12, 50) se déplace dans des directions inverses entre des première et seconde positions de manière à faire en sorte que la pluralité de clabots (7) pivote entre ses configurations engagée et désengagée, **caractérisé en ce que** :
la première surface d'actionnement sur l'élément d'actionneur (12, 50) inclut une première came (22) et une seconde came (24) qui sont en contact continu avec la seconde surface d'actionnement (26) de chaque clabot (7) de telle sorte que trois points de contact continu soient définis entre chaque clabot (7), son support de pivot respectif et les première et seconde cames (22, 24), de manière à fixer la position de chaque clabot (7) par rapport à une position donnée de l'élément d'actionneur (12, 50).

2. Agencement de connexion (1) selon la revendication 1, dans lequel la pluralité de clabots (7) est agencée autour d'un axe commun du corps (8).

3. Agencement de connexion (1) selon la revendication 2, dans lequel chacun de la pluralité de clabots (7) est agencé avec ses supports de pivot dans le même plan.

4. Agencement de connexion (1) selon l'une quelconque des revendications 1 à 3, dans lequel l'élément d'actionneur (12) est un piston annulaire (12), en option dans lequel le piston annulaire (12) peut être déplacé autour d'un axe longitudinal par rapport à l'objet (4).

5. Agencement de connexion (1) selon l'une quelconque des revendications qui précèdent, dans lequel l'élément d'actionneur (12) peut être actionné au moyen d'une pression hydraulique.

6. Agencement de connexion (1) selon l'une quelconque des revendications qui précèdent, dans lequel les première et seconde cames (22, 24) se déplacent le long du profil de la seconde surface d'actionnement (26) dans une première direction pour amener les clabots (7), ou une extrémité des clabots qui inclut la caractéristique d'engagement (16), à pivoter vers l'intérieur, et leur déplacement le long du profil de la seconde surface d'actionnement (26) dans une seconde direction opposée amène les clabots (7), ou une extrémité des clabots qui inclut la caractéristique d'engagement (16), à pivoter vers l'extérieur.

7. Agencement de connexion (1) selon l'une quelconque des revendications qui précèdent, dans lequel, lorsque l'élément d'actionneur (12) est dans la position engagée, les surfaces de contact entre les première et seconde cames (22, 24) et la seconde surface d'actionnement (26) sur les clabots (7) sont parallèles à un axe commun du corps (8) et sont concentriques à celui-ci.

8. Agencement de connexion (1) selon l'une quelconque des revendications qui précèdent, dans lequel la caractéristique d'engagement (16) est située sur une extrémité libre de chaque clabot sur une surface opposée à la seconde surface d'actionnement (26), et la première came (22) est située sur un côté du support de pivot du clabot (7) et la seconde came est située sur l'autre côté du support de pivot du clabot (7) pendant le déplacement de l'élément d'actionneur (12, 50), au moins jusqu'à ce que la caractéristique d'engagement (16) soit engagée dans l'objet (4).

9. Agencement de connexion (1) selon l'une quelconque des revendications 1 à 8, dans lequel la caractéristique d'engagement (16) est située sur une extrémité libre de chaque clabot (7) ; et dans lequel :
la première came (22) entre en contact avec une section de la seconde surface d'actionnement (26) au niveau du même côté du clabot (7) que la caractéristique d'engagement (16) ;
la seconde came (24) entre en contact avec une section de la seconde surface d'actionnement (26) sur une surface opposée au côté de chaque clabot (7) qui est muni de la caractéristique d'engagement (16) ; et
les première et seconde cames (22, 24) sont toutes deux positionnées au niveau de l'extrémité de chaque clabot (7) sur l'autre côté du support de pivot par rapport à la caractéristique d'engagement (16), au moins jusqu'à ce que la caractéristique d'engagement (16) soit engagée dans l'objet (4).

10. Agencement de connexion (1) selon l'une quelconque des revendications qui précèdent, dans lequel l'objet (4) comprend une partie tubulaire et inclut une gorge annulaire (20) sur la partie tubulaire de l'objet pour un engagement dans les caractéristiques d'engagement (16) des clabots (7).

11. Agencement de connexion (1) selon l'une quelconque des revendications qui précèdent, dans lequel le corps (8) est sélectionné parmi le groupe qui est constitué par une tubulure, un tubage et une tête de puits et/ou dans lequel l'objet (4) comprend une unité de puits sous-marin, telle qu'un arbre de production ou qu'un arbre de test sous-marin.

12. Agencement de connexion (1) selon l'une quelconque des revendications qui précèdent, dans lequel l'agencement de connexion est un connecteur sous-marin.

13. Agencement de connexion (1) selon l'une quelconque des revendications qui précèdent, comprenant en outre des éléments de couplage (34, 36) destinés à jouer le rôle d'éléments de guidage pour connecter et/ou déconnecter le corps (8) par rapport à l'objet (4), en option comprenant un premier élément de couplage (34) qui est monté sur une extrémité du corps (8) et un second élément de couplage (36) qui est monté sur une extrémité de l'objet (4), en option dans lequel les premier et second éléments de couplage (34, 36) sont de forme conique ou de forme générale conique et sont formés de manière à s'inter-engager par emboîtement l'un à l'intérieur de l'autre selon une connexion mâle-femelle.

14. Agencement de connexion (1) selon la revendication 13, dans lequel le premier élément de couplage est une embouchure (34) sur le corps (8) et comprend un jeu d'éléments annulaires (38) de diamètres croissants en direction de l'ouverture de l'embouchure (34) ; et dans lequel le second élément de couplage (36) sur l'objet comprend une pluralité de nervures (40, 42), chacune faisant saillie radialement vers l'extérieur autour d'un axe longitudinal et formant un profil conique qui est rétréci en direction d'une extrémité libre sur laquelle le corps (8) est connecté.

15. Agencement de connexion (1) selon la revendication 13, dans lequel le premier élément de couplage (34) présente un profil convexe radialement vers l'intérieur et le second élément de couplage (36) présente un profil concave complémentaire.
